# EUROPEAN PATENT APPLICATION

(11) **EP 2 873 891 A1**
(43) Date of publication of application: **20.05.2015**
(21) Application number: 12881127.0
(22) Date of filing: 03.08.2012
(51) Int. Cl.: F16H 25/20, F16D 23/14, F16H 25/22

(54) **ELECTRIC ACTUATOR**

(30) Priority: 10.07.2012 JP 2012155057; 10.07.2012 JP 2012155058
(71) Applicant: NSK Ltd., Tokyo 141-8560 (JP)
(72) Inventor: MATSUDA, Yasuyuki, Fujisawa-shi Kanagawa 251-8501 (JP); GUNJI, Daisuke, Fujisawa-shi Kanagawa 251-8501 (JP); SAITO, Tomoharu, Fujisawa-shi Kanagawa 251-8501 (JP); TANAKA, Kazutaka, Fujisawa-shi Kanagawa 251-8501 (JP); YAMASHITA, Tomofumi, Fujisawa-shi Kanagawa 251-8501 (JP); IMANISHI, Takashi, Fujisawa-shi Kanagawa 251-8501 (JP)
(74) Representative: Schwabe - Sandmair - Marx
(86) International application number: PCT/JP2012/069904
(87) International publication number: WO 2014/010103

(57) **Abstract**

An electric actuator 100 includes a screw shaft 111 that is mounted on one end 200T1 of a drag bar 200, and that has a first helical groove 121 on its outer peripheral surface; a rotor 113 that has a hollow portion 113I into which the screw shaft 111 is arranged, wherein a second helical groove 122 corresponding to the first helical groove 121 is formed on a part of the inner peripheral surface of the hollow portion 113I, and other end 200T2 of the drag bar 200 projects from the hollow portion 113I; plural balls 123 arranged between the first groove 121 and the second groove 122; a deflector 112 that is mounted to the rotor 113 for circulating the balls 123; a stator 110 that rotates the rotor 113 so as to move the drag bar 200 in its longitudinal direction; and a rotation preventing member 107 that is engaged with a part of the drag bar 200 so as to prevent the rotation of the drag bar 200.

## Description

### TECHNICAL FIELD

The present invention relates to an electric actuator having a mechanism for converting a rotation motion of an electric motor into a linear motion.

### BACKGROUND ART

With a development of a power-saving vehicle or the like, a system has recently been developed in which a transmission or a parking brake of a vehicle is operated with a power of an electric motor. An actuator used for this purpose includes a ball screw mechanism for converting a rotation motion transmitted from the electric motor into a motion in an axial direction with high efficiency (e.g., see Patent Literature 1).

### Citation List

### Patent Literature

Patent Literature 1: JP-A-2006-71009

### SUMMARY OF INVENTION

### TECHNICAL PROBLEM

It is preferable that an electric actuator used for a vehicle such as an automobile has components as few as possible according to requests to reduce the mass of the electric actuator as much as possible and to reduce cost.

The present invention aims to reduce a number of components of the electric actuator.

### Solution to Problem

According to the present invention, an electric actuator includes: an operation member that is a bar-like member, and that has a first helical groove on its outer peripheral surface on one end; a rotor that is a cylindrical member having a hollow portion into which the operation member is arranged, the hollow portion having a second helical groove, corresponding to the first groove, on a part of its inner peripheral surface, and an opening from which the other end of the operation member projects from the hollow portion; plural balls arranged between the first groove and the second groove; a circulating member mounted to the rotor for circulating the balls; a stator that is arranged at the outside of the rotor in the diameter direction that rotates the rotor about an axis of the rotor in order to move the operation member in the direction of the axis; and a rotation preventing member that is engaged with a part of the operation member for preventing the rotation of the operation member about the axis.

In the electric actuator described above, the nut of the ball screw and the rotor of the electric motor are integrally formed, whereby the rotor of the electric motor has the function of the nut of the ball screw. Therefore, the number of components for moving the operation member forward and backward can be reduced, and the structure can be simplified. In the electric actuator, the operation member and the rotation preventing member are engaged with each other to prevent the rotation of the operation member, resulting in that a member such as a key is unnecessary. Consequently, the electric actuator can reduce the number of components.

As a preferable aspect of the present invention, the circulating member is buried in the rotor from the outer peripheral surface of the rotor, and the rotor has a cylindrical member mounted on its outer peripheral surface and at the outside of the circulating member. Even if plural circulating members are mounted to the rotor, the movements of all of the circulating members in the diameter direction are restricted by mounting a single cylindrical member at the outside of the circulating members. Therefore, it is unnecessary to prepare a retaining member or a retaining mechanism for each of the circulating members, whereby the number of components can be reduced, and the structure can be simplified.

As a preferable aspect of the present invention, a direction of a load in the direction of the axis is the same on the portion of the operation member where the first groove is formed and on the portion of the rotor where the second groove is formed. With this structure, the load is equally applied to the plural balls arranged between the first groove and the second groove, whereby the deformation of the rotor can be prevented.

As a preferable aspect of the present invention, the operation member has a cylindrical screw shaft, having the first groove on its outer peripheral surface, on the outer periphery on one end, the screw shaft is mounted on one end of the operation member, the rotor is mounted such that the portion where the opening is formed is supported to be rotatable to a housing, to which the stator is mounted, via a rolling bearing, and an input position of a load to the screw shaft is arranged on a position apart from the rolling bearing from a center of a region where the plural balls are arranged in the direction of the axis.

As a preferable aspect of the present invention, the input position of the load to the screw shaft is arranged on a position apart from the rolling bearing from the region where the plural balls are arranged in the direction of the axis. With this structure, the electric actuator can make the surface pressure on the ball contact point more uniform according to the position in the axial direction.

As a preferable aspect of the present invention, the operation member has a cylindrical screw shaft, having the first groove on its outer peripheral surface, on the outer periphery on one end, the screw shaft is mounted on one end of the operation member, the rotor is mounted such that the portion reverse to the portion where the opening is formed is supported to be rotatable to a housing, to which the stator is mounted, via a rolling bearing, and an input position of a load to the screw shaft is arranged on a position apart from the rolling bearing from a center of a region where the plural balls are arranged in the direction of the axis. With this structure, the direction of the load in the axial direction can be made equal on the portion of the operation member where the first groove is formed and on the portion of the rotor where the second groove is formed. Consequently, the electric actuator makes it possible to have uniform surface pressure on the ball contact point according to the position in the axial direction.

As a preferable aspect of the present invention, the input position of the load to the screw shaft is arranged on a position apart from the rolling bearing from the region where the plural balls are arranged in the direction of the axis. With this structure, the electric actuator can make the surface pressure on the ball contact point more uniform according to the position in the axial direction.

As a preferable aspect of the present invention, the rolling bearing has a sealing member, which seals between an inner wheel and an outer wheel, on the side where the rotor and the stator are arranged. This structure can prevent the lubricant oil or grease of the rolling bearing from being scattered on the portion where the stator is arranged.

As a preferable aspect of the present invention, the portion of the rotor where the opening is formed serves as the inner wheel of the rolling bearing. With this structure, the number of the components of the electric actuator can be reduced.

As a preferable aspect of the present invention, the electric actuator further includes: when a clutch, provided in a power transmission device that includes a hollow power transmission shaft for transmitting power from a power source and the clutch arranged between the power source and the power transmission shaft, is operated, a clutch release bearing that is mounted to the end of the operation member reverse to the rotor, and that applies an input to the clutch from the operation member; and a torque sensor that is mounted to the operation member for detecting torque transmitted by the power transmission shaft. The electric actuator has a unit structure in which the clutch release bearing, the torque sensor, and an electric motor including the stator and the rotor are integral through the operation member. This structure can place the operation member and the torque sensor on the same position, whereby the number of components can be reduced.

As a preferable aspect of the present invention, the operation member has a passage extending in its longitudinal direction and open to the end near the rotor, and a signal line of the torque sensor is extracted from the passage of the operation member through the opening, and fixed to the operation member on the portion of the opening. With this structure, the relative movement of the opening and the passage, and the signal line is restricted, whereby the deterioration in the durability caused by a friction of the signal line can be prevented.

As a preferable aspect of the present invention, the inner surface of the power transmission shaft is covered by a Ni-based thin film. With this structure, the change in the magnetic permeability of the power transmission shaft increases, whereby the sensitivity of the torque sensor to the torque transmitted by the power transmission shaft can be enhanced.

According to the present invention, an electric actuator that operates a clutch, provided in a power transmission device that includes a hollow power transmission shaft for transmitting power from a power source and the clutch arranged between the power source and the power transmission shaft, includes: a stator; a rotor arranged at the inside of the stator in the diameter direction; a bar-like operation member arranged at the inside of the power transmission shaft; a conversion mechanism configured to convert a rotation motion of the rotor into a linear motion in the extending direction of the operation member; a clutch release bearing that is mounted to the end of the operation member reverse to the rotor, and that applies an input to the clutch from the operation member; and a torque sensor that is mounted to the operation member for detecting torque transmitted by the power transmission shaft.

The electric actuator has a unit structure in which the clutch release bearing, the torque sensor, and an electric motor including the stator and the rotor are integral through the operation member. This structure can place the operation member and the torque sensor on the same position, whereby the number of components can be reduced.

As a preferable aspect of the present invention, the operation member has a passage extending in its longitudinal direction and open to the end near the conversion mechanism, and a signal line of the torque sensor is extracted from the passage of the operation member through the opening, and fixed to the operation member on the portion of the opening. With this structure, the relative movement of the opening and the passage, and the signal line is restricted, whereby the deterioration in the durability caused by a friction of the signal line can be prevented.

As a preferable aspect of the present invention, the torque sensor includes a first torque sensor and a second torque sensor that is mounted on a different position from the first torque sensor in the longitudinal direction and in the circumferential direction of the operation member. With this structure, the error caused by the rotation fluctuation of the power transmission shaft can be corrected.

As a preferable aspect of the present invention, the inner surface of the power transmission shaft is covered by a Ni-based thin film. With this structure, the change in the magnetic permeability of the power transmission shaft increases, whereby the sensitivity of the torque sensor to the torque transmitted by the power transmission shaft can be enhanced.

As a preferable aspect of the present invention, the torque sensor is mounted to the outer periphery of the operation member for detecting the torque from the inside of the power transmission shaft. With this structure, it becomes unnecessary to arrange the torque sensor in the power transmission device and at the outside of the power transmission shaft. As a result, the torque sensor is less susceptible to the lubricant oil present in the power transmission device, whereby the durability and reliability can be enhanced.

As a preferable aspect of the present invention, a resin is interposed between the torque sensor and the operation member. With this structure, the leakage of the magnetic flux to the operation member can be prevented, when the operation member is made of metal. Accordingly, the deterioration in the sensitivity of the torque sensor can be prevented.

It is preferable that, in the present invention, the operation member is non-magnetic. With this structure, the leakage of the magnetic flux to the operation member can further be prevented, whereby the deterioration in the sensitivity of the torque sensor can be prevented.

It is preferable that, in the present invention, magnetic fluid is present between the operation member and the power transmission shaft. With this structure, the air layer between the torque sensor and the power transmission shaft is replaced by the magnetic fluid, and hence, the magnetic resistance between them is reduced. Accordingly, the sensitivity of the torque sensor can be enhanced. Advantageous Effects of Invention

The present invention can reduce a number of components of the electric actuator.

### Brief Description of Drawings

FIG. 1 is a skeleton view illustrating one example of an automatic transmission provided with an electric actuator according to an embodiment of the present invention.
FIG. 2 is a perspective view illustrating the electric actuator according to the embodiment of the present invention.
FIG. 3 is a perspective view illustrating the electric actuator according to the embodiment of the present invention.
FIG. 4 is a sectional view illustrating the electric actuator according to the embodiment of the present invention.
FIG. 5 is an exploded perspective view of an electric motor provided to the electric actuator according to the embodiment of the present invention.
FIG. 6 is a sectional view illustrating the electric actuator according to the embodiment of the present invention, wherein a clutch release bearing is attached to a drag bar.
FIG. 7 is a perspective view illustrating one example of an arrangement of a torque sensor.
FIG. 8 is an enlarged sectional view illustrating a portion where the torque sensor is attached.
FIG. 9 is a schematic view illustrating a relationship of force between a screw shaft and a rotor provided to the electric actuator.
FIG. 10 is a schematic view illustrating a relationship of force between the screw shaft and the rotor provided to the electric actuator.
FIG. 11 is a view illustrating a distribution of a surface pressure exerted on a ball of the electric actuator according to the embodiment of the present invention.
FIG. 12 is a schematic view illustrating a relationship of force between the screw shaft and the rotor provided to the electric actuator.
FIG. 13 is a schematic view illustrating a relationship of force between the screw shaft and the rotor provided to the electric actuator.
FIG. 14 is a view illustrating a distribution of a surface pressure exerted on the ball of the electric actuator according to the embodiment of the present invention.
FIG. 15 is a schematic view illustrating a relationship of force between the screw shaft and the rotor provided to the electric actuator.
FIG. 16 is a schematic view illustrating a relationship of force between the screw shaft and the rotor provided to the electric actuator.
FIG. 17 is a view illustrating a relationship among a ball arrangement region, a load input position of the screw shaft, and a load operation position of a rolling bearing.
FIG. 18 is a view illustrating a relationship among the ball arrangement region, the load input position of the screw shaft, and the load operation position of a rolling bearing.
FIG. 19 is a view illustrating an electric actuator according to a modification of the embodiment of the present invention.
FIG. 20 is a sectional view illustrating an arrangement of a sealing member of the rolling bearing in the electric actuator according to the embodiment of the present invention.
FIG. 21 is a sectional view illustrating an electric actuator provided with a rotor that also serves as an inner wheel of the rolling bearing.
FIG. 22 is an enlarged view illustrating the rolling bearing of the electric actuator illustrated in FIG. 18. Description of Embodiments

Embodiments for carrying out the present invention (embodiments) will be described in detail with reference to the drawings.

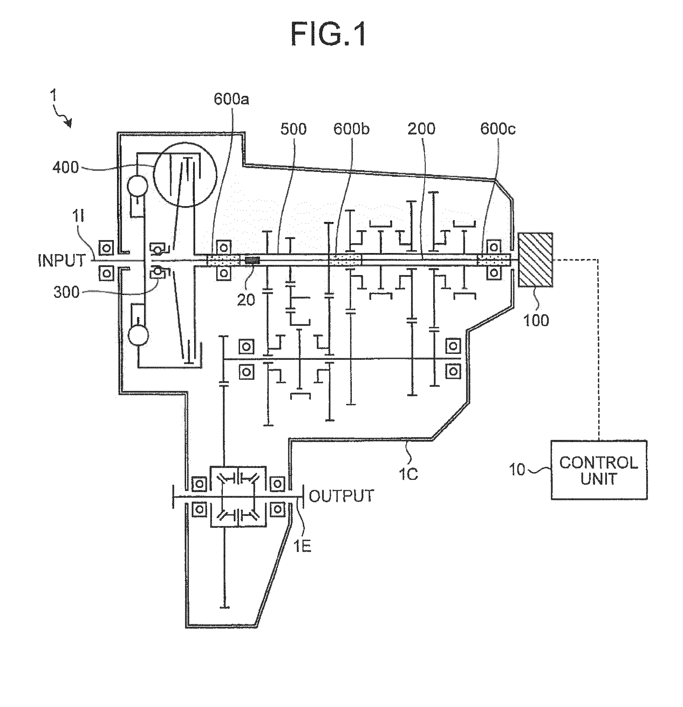

FIG. 1 is a skeleton view illustrating one example of an automatic transmission provided with an electric actuator according to the present embodiment. The automatic transmission 1 serving as a power transmission device is used for a vehicle such as an automobile, and it converts a rotation speed and torque of an internal combustion engine serving as a power source, and outputs the resultant. The automatic transmission 1 is an AMT (Automated Manual Transmission) formed by mounting a clutch, various actuators for performing a shift operation or select operation, and an ECU (Electric Control Unit) for controlling these to a so-called manual transmission. The automatic transmission is not limited to the AMT, but may be a DCT (Dual Clutch Transmission) having dual clutches. An output shaft of an internal combustion engine or the like serving as a power source is coupled to an input shaft 1I of the automatic transmission 1, while a wheel is coupled to an output shaft 1E thereof.

The automatic transmission 1 includes an electric actuator 100 according to the present embodiment. The electric actuator 100 operates a clutch 400 provided in the automatic transmission 1. The clutch 400 is a dry clutch. However, it is not limited thereto. The clutch 400 may be a wet clutch, for example. When the automatic transmission 1 is the DCT, the automatic transmission 1 includes dual clutches 400. In this case, the automatic transmission 1 includes two electric actuators 100. Each of the electric actuators 100 operates the corresponding clutch 400.

The electric actuator 100 allows a drag bar 200, which serves as an operation member, and to which a clutch release bearing 300 is attached at its leading end (other end), to move forward and backward in its axial direction so as to engage or disengage the clutch 400. The axial direction of the drag bar 200 is a direction in which the drag bar 200 extends, i.e., a longitudinal direction. The drag bar 200 is arranged in a hollow power transmission shaft 500 that rotates integral with a driven side of the clutch 400. The drag bar 200 is supported so as to be capable of moving forward and backward in the axial direction by the operation of the electric actuator, and so as not to be rotatable.

Plural rolling bearings 600a, 600b, and 600c are arranged between the drag bar 200 and the power transmission shaft 500. In the present embodiment, the plural rolling bearings 600a, 600b, and 600c are needle bearings (caged roller bearing, or shell needle bearing), but they are not limited thereto. The plural rolling bearings 600a, 600b, and 600c avoid the contact between the drag bar 200 and the power transmission shaft 500 during the relative rotation, and suppress the occurrence of vibration and noise of the drag bar 200. The drag bar 200 is arranged such that tensile force is exerted thereon when the clutch 400 is disengaged. During when the clutch 400 is engaged, neither tensile force nor compression force is exerted on the drag bar 200.

As described later, the drag bar 200 includes a torque sensor 20. The torque sensor 20 is arranged between the drag bar 200 and the power transmission shaft 500. The plural rolling bearings 600a, 600b, and 600c suppress the relative displacement between the drag bar 200 and the power transmission shaft 500 to monitor a gap between the torque sensor 20 and the power transmission shaft 500.

A control unit 10 controls the operation of the electric actuator 100. The control unit 10 is a computer including a processing device (e.g., CPU: Central Processing Unit), a control device, a memory device, and input/output device. The control unit 10 controls the electric actuator 100 based upon an operation of a driver of a vehicle provided with the automatic transmission 1, in order to engage or disengage the clutch 400.

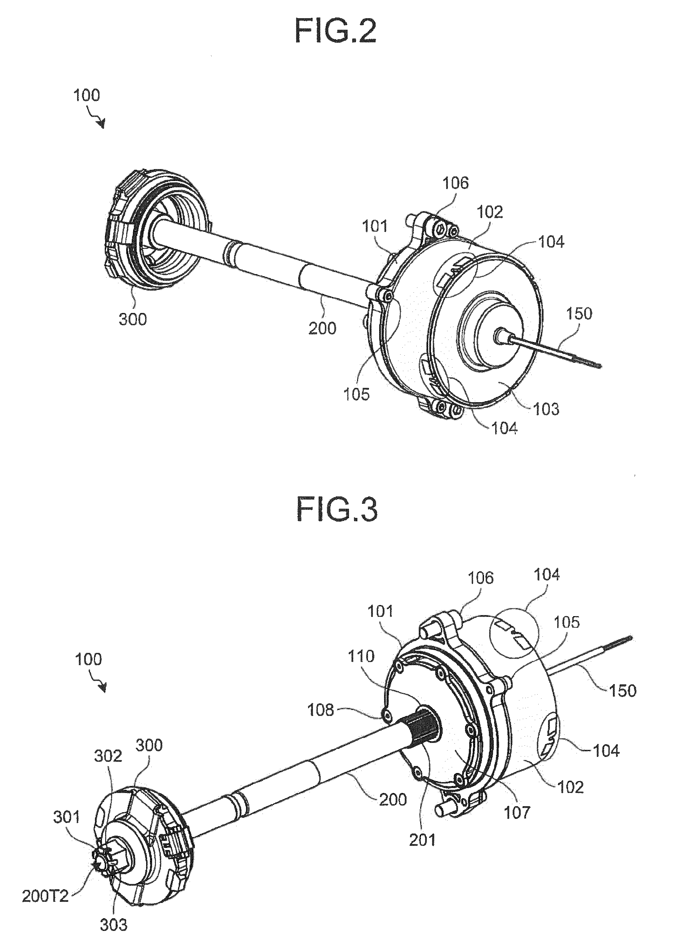

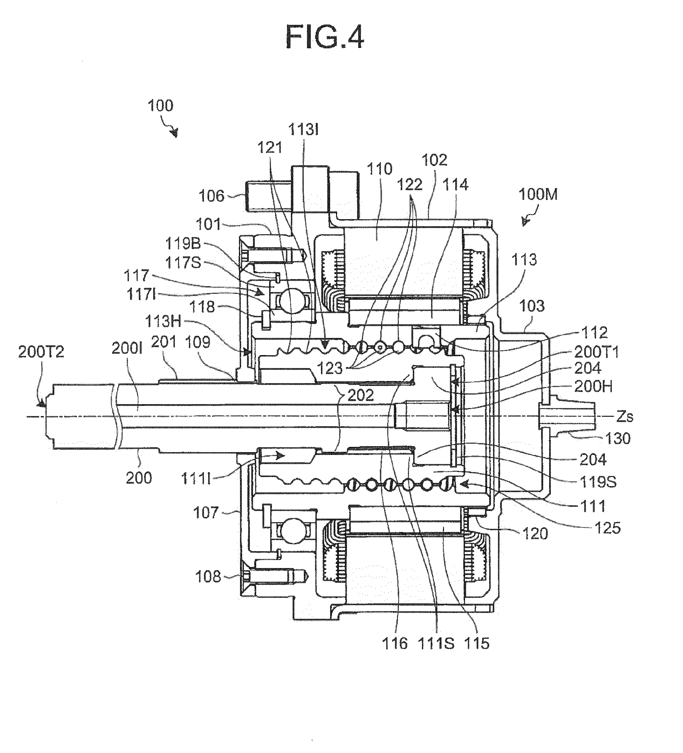

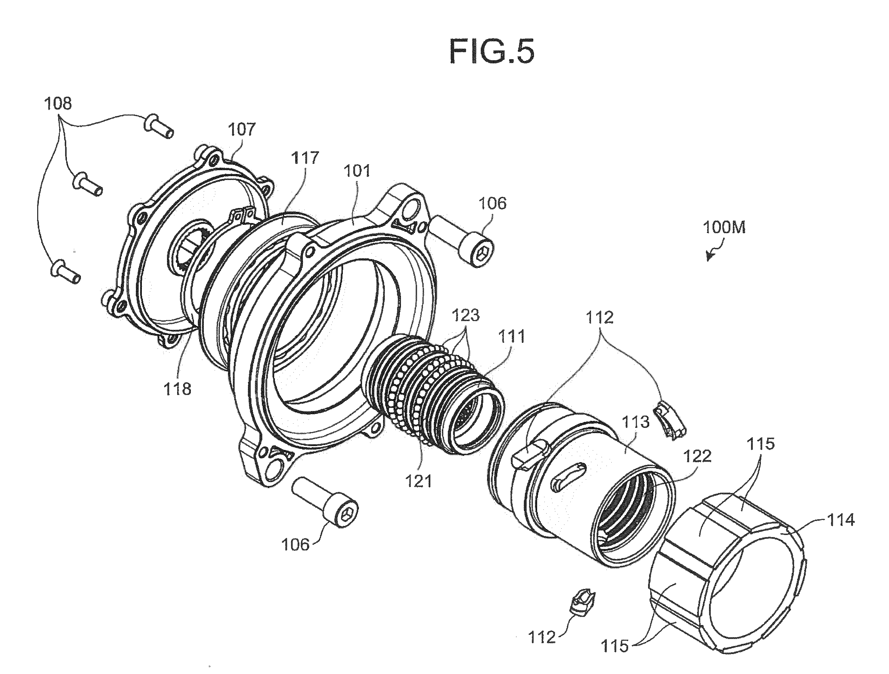

FIGS. 2 and 3 are perspective views illustrating the electric actuator according to the present embodiment. FIG. 4 is a sectional view of the electric actuator according to the present embodiment. FIG. 5 is an exploded perspective view of the electric motor provided to the electric actuator according to the present embodiment. The electric actuator 100 includes an electric motor 100M and the drag bar 200. The electric motor 100M includes a first motor case 101 that is made of an aluminum alloy and that is a cylindrical structure, a second motor case 102 that is made of SPCC (cold rolled steel plate) and that is a cylindrical structure, and a third motor case 103 that is made of an aluminum alloy and that is generally a disk-like structure. These are a housing of the electric actuator 100.

The first motor case 101 and the second motor case 102 are fastened to each other with four bolts (in the present embodiment, hexagon head bolts) 105. The second motor case 102 and the third motor case 103 are fastened to each other by four caulking portions that are equally arranged on a circumference of the bonding surface. The electric actuator 100 is fastened to a housing 1C of the automatic transmission 1 illustrated in FIG. 1 by two bolts 106 mounted to the first motor case 101. A signal line 150 is drawn from the above-mentioned torque sensor 20 from the third motor case 103.

The electric actuator 100 operates the clutch 400 of the automatic transmission 1 illustrated in FIG. 1 via the drag bar 200. The drag bar 200 extends through a rotation preventing member 107. The rotation preventing member 107 is engaged with a part of the drag bar 200 so as to prevent the rotation of the drag bar 200 around the axis. The rotation preventing member 107 is a disk-like member. In the present embodiment, the rotation preventing member 107 is fastened to one end of the first motor case 101 with six hexagon head flush bolts.

The rotation preventing member 107 has a through-hole 109 through which the drag bar 200 extends. An involute spline is formed on a sliding surface of the through-hole 109 with the drag bar 200. As described above, the through-hole 109 is an involute spline hole. The drag bar 200 has a first involute spline shaft 201 arranged on the sliding surface between the drag bar 200 and the rotation preventing member 107. With this structure, the drag bar 200 is guided to the through-hole 109 so as to be slidable in the direction of the axis (an axis Zs in FIG. 4) and so as not to be rotatable in the circumferential direction. The sliding surface of the first involute spline shaft 201 and the through-hole 109 has a small gap. The surface of the first involute spline shaft 201 is covered with a resin, whereby the slide-friction change with the through-hole 109 is decreased. The resin covering the surface of the involute spline shaft 201 is fluorine resin, for example. The surface of the involute on the through-hole 109 may be covered with a resin.

The clutch release bearing 300 is arranged on the end (other end) 200T2, opposite to the electric motor 100M, of the drag bar 200. The clutch release bearing 300 is fastened to the drag bar 200 with a nut 301. In the present embodiment, the nut 301 is a hexagon nut. A U-shaped cutout 302 is formed on each side of the nut 301 at the side reverse to the clutch release bearing 300. A spring pin 303 is inserted into each of the U-shaped cutouts 302. This structure can prevent the nut 301, which fastens the clutch release bearing 300 to the other end 200T2 of the drag bar 200, from getting loose.

As illustrated in FIG. 4, a stator 110, a screw shaft 111, and a rotor 113 are arranged in the first motor case 101, the second motor case 102, and the third motor case 103. The screw shaft 111 has a first helical groove on its outer peripheral surface. The screw shaft 111 is a cylindrical structure having a hollow portion 111I in which a part of the drag bar 200 at one end 200T1 is arranged. The hollow portion 111I extends through the screw shaft 111 from one end to the other end. The shape of the cross-section of the hollow portion 111I orthogonal to the extending direction is circular. The screw shaft 111 is attached to one end 200T1 of the drag bar 200 to form a part of the drag bar 200. Therefore, the drag bar 200 has the first helical groove 121 on the outer peripheral surface at one end 200T1.

The stator 110 has an annular stator core and a coil wound around the stator core. The stator core of the stator 110 is pressed into the inner peripheral surface of the second motor case 102.

The rotor 113 is a cylindrical member having a hollow portion 113I. The hollow portion 113I extends through the rotor 113 from one end to the other end. The shape of the cross-section of the hollow portion 113I of the rotor 113 orthogonal to the extending direction is circular. The rotor 113 is arranged at the inside in the diameter direction of the stator 110. Specifically, the stator 110 is arranged at the outside in the diameter direction of the rotor 113. The drag bar 200 is arranged in the hollow portion 113I of the rotor 113. In the present embodiment, the portion of the drag bar 200 to which the screw shaft 111 is attached is arranged in the hollow portion 113I. The rotor 113 rotates about the Zs axis. In other words, the Zs axis is a central shaft of rotation of the rotor 113.

The rotor 113 has a second helical groove 122, corresponding to the first helical groove 121 of the screw shaft 111, on a part of the inner peripheral surface of the hollow portion 113I. The first groove 121 is a male thread groove, while the second groove 122 is a female thread groove. The rotor 113 has an opening 113H from which the other end 200T2 of the drag bar 200 projects from the hollow portion 113I. When the screw shaft 111 is arranged on the hollow portion 113I of the rotor 113, the first groove 121 and the second groove 122 oppose to each other. A rolling path is formed between the first groove 121 and the second groove 122. Plural balls 123 are arranged on the rolling path between the first groove 121 and the second groove 122. In the present embodiment, each ball 123 is a steel ball.

Each of the plural balls 123 goes over a land portion of the screw shaft 111, and returns to the original rolling path for every 1 lead with the rotation of the rotor 113. Thus, each of the plural balls 123 circulates. In the present embodiment, a so-called flop-over system is employed for a method of circulating the balls 123. In this system, a deflector 112 serving as a circulating member and buried in the rotor 113 allows the plural balls 123 to go over the land portion of the screw shaft 111 and to return the same to the original rolling path, thereby allowing the plural balls 123 to circulate in the rolling path. As described above, the deflector 112 is attached to the rotor 113 to form a circulation path of the balls 123 in order to allow the balls 123 to circulate. In the present embodiment, three deflectors 112 are mounted to the rotor 113 in the circumferential direction at an interval of 120 degrees. The method of circulating the plural balls 123 is not limited to the flop-over system.

The plural deflectors 112 are inserted into the rotor 113 from the outside in the diameter direction of the rotor 113, and buried therein. A rotor lamination stack 114 that is a cylindrical member is attached to the outer peripheral surface of the rotor 113 and on the outside of the deflectors 112. The rotor lamination stack 114 is pressed into the rotor 113 to be fixed thereto. With this structure, the deflectors 112 are integrally fixed to the rotor 113. As illustrated in FIGS. 4 and 5, plural magnets 115 are mounted on the outer peripheral surface of the rotor lamination stack 114. A permanent magnet is used as the magnet 115, for example. The plural magnets 115 are bonded to be fixed to the rotor lamination stack 114. The plural magnets 115 may be buried in the rotor lamination stack 114.

The drag bar 200 has a large-diameter portion 204 formed by protruding a part of one end 200T1 in the diameter direction. The inner diameter of the hollow portion 111I of the screw shaft 111, through which the drag bar 200 extends to be arranged, is increased at one end 200T1 of the drag bar 200. The hollow portion 111I has step portions 111S between a portion having a small inner diameter and a portion having a large inner diameter. The large-diameter portion 204 of the drag bar 200 arranged in the hollow portion 111I of the screw shaft 111 is engaged with the step portion 111S of the hollow portion 111I. A snap ring 119S is mounted on the hollow portion 111I at one end 200T1 of the drag bar 200. The snap ring 119S is fitted into a groove formed on the inner peripheral surface of the hollow portion 111I, and engaged with one end 200T1 of the drag bar 200. With this structure, the large-diameter portion 204 of the drag bar 200 is engaged with the step portion 111S of the screw shaft 111 and the snap ring 119S mounted to the hollow portion 111I of the screw shaft 111. As a result, the relative movement of the drag bar 200 and the screw shaft 111 in the axial direction (in the direction of the Zs axis), i.e., in the extending direction (longitudinal direction) of the drag bar 200, is restricted.

An involute spline hole 116 is formed on the inner peripheral surface of the screw shaft 111, wherein the second involute spline shaft 202 of the drag bar 200 is fitted to the involute spline hole 116. Since the involute spline hole 116 and the second involute spline shaft 202 are engaged with each other, rotation force is transmitted between the screw shaft 111 and the drag bar 200. In the present embodiment, the first involute spline shaft 201 and the second involute spline shaft 202 are designed with the same specification. This provides an advantage of facilitating the processing of both of them.

A rolling bearing 117 that rotatably supports the rotor 113 is mounted to the first motor case 101. In the present invention, the rolling bearing 117 is a ball bearing. However, the rolling bearing 117 is not limited to the ball bearing, so long as it can retain an axial load and radial load of the rotor 113. The movement of the rolling bearing 117 in the axial direction is restricted by a shaft snap ring 118 mounted on the outer periphery of the rotor 113 and a hole snap ring 119B mounted on the inner peripheral surface of the first motor case 101. The shaft snap ring 118 is mounted between an inner wheel 117I of the rolling bearing 117 and the rotor 113, while the hole snap ring 119B is mounted between the first motor case 101 and an outer wheel 117S of the rolling bearing 117. With this structure, the rolling bearing 117 can retain axial loads in both directions, i.e., both loads in the axial direction (the direction of the Zs axis).

The rotor 113 is supported to be rotatable by a slide bearing 120, attached to the third motor case 103, on the side reverse to the side supported by the rolling bearing 117. The slide bearing 120 supports only the radial load of the rotor 113. As described above, the rotor 113 is supported to be rotatable to the first motor case 101 and the third motor case 103, serving as the housing of the electric motor 100M, by the rolling bearing 117 and the slide bearing 120.

The rotor 113, the plural balls 123, the screw shaft 111, and the deflectors 112 form a ball screw. The rotor 113 corresponds to a nut of the ball screw. Specifically, in the present embodiment, the nut of the ball screw and the rotor 113 of the electric motor 100M are the same structure. Since the rotation of the drag bar 200 about the Zs axis is impossible by the rotation preventing member 107 as described above, the rotation of the screw shaft 111 mounted to the drag bar 200 about the Zs axis is also impossible. When the rotor 113 in a conversion mechanism 125 rotates, the screw shaft 111 is about to rotate together with the rotor 113 by the friction with the balls 123. In this case, the rotation of the screw shaft 111 is inhibited by the rotation preventing member 107 via the drag bar 200. Therefore, the screw shaft 111 and the drag bar 200 move forward and backward in the Zs axis by the conversion mechanism 125.

As described above, the rotor 113, the plural balls 123, the screw shaft 111, and the deflectors 112 serve as the conversion mechanism 125 for converting the rotation motion of the rotor 113 into a linear movement of the screw shaft 111 and the drag bar 200 to which the screw shaft 111 is mounted. The above-mentioned linear movement is in the extending direction of the drag bar 200, i.e., in the longitudinal direction of the drag bar 200, and in the direction of the Zs axis that is the axis of the rotation center of the rotor 113. The stator 110 of the electric motor 100M is arranged at the outside in the diameter direction of the rotor 113 so as to rotate the rotor 113 about the Zs axis. With this structure, the stator 110 moves the drag bar 200 in the direction of the Zs axis via the screw shaft 111.

When the electric actuator 100 disengages the clutch 400 in the automatic transmission 1 illustrated in FIG. 1, the rotor 113 of the electric motor 100M rotates in order that the drag bar 200 is pulled into the housing of the electric motor 100M. The tensile force upon disengaging the clutch 400 is transmitted to the screw shaft 111 via the large-diameter portion 204 of the drag bar 200 and the step portion 111S of the screw shaft 111. When the clutch 400 is engaged, the rotor 113 of the electric motor 100M rotates in order that the drag bar 200 projects from the housing of the electric motor 100M. In a transition state where the clutch 400 returns again to the engaged state after being disengaged, compression force is exerted on the drag bar 200. This compression force is transmitted to the screw shaft 111 via the snap ring 119S.

As illustrated in FIG. 4, the drag bar 200 has a passage 200I extending in the longitudinal direction. The passage 200I is open to the end near the conversion mechanism 125 (or near the rotor 113), i.e., to one end 200T1. In the passage 200I, the signal line 150 of the above-mentioned torque sensor 20 is arranged, and extracted from an opening 200H open to one end 200T1. The signal line 150 passes through a protection member 130 attached to the third motor case 103, and is extracted to the outside of the housing of the electric motor 100M. The protection member 130 is provided to avoid the direct contact between the signal line and the third motor case 103. It is made of rubber or resin, for example.

The transmission path of the rotation force caused by the friction between the screw shaft 111 and the balls 123 is formed by the screw shaft 111, the drag bar 200, the rotation preventing member 107, and the first motor case 101 of the electric actuator 100 in this order. In the transmission path, the screw shaft 111 and the drag bar 200 are integrally fastened to each other, and the rotation preventing member 107 and the first motor case 101 are integrally fastened to each other. Accordingly, in the transmission path of the rotation force, only the drag bar 200 and the rotation preventing member 107 make a relative movement. In the electric actuator 100, the first involute spline shaft 201 and the through-hole 109 on which the involute spline is formed are provided on the portion where the relative movement is generated, in order to inhibit the rotation of the drag bar 200. Accordingly, the drag bar 200 can move forward and backward in the direction of the Zs axis, and further, the rotation of the drag bar 200 can be inhibited, without a need of additional components.

As described above, the electric actuator 100 can move forward and backward the screw shaft 111 and the drag bar 200 by the configuration in which the nut of the ball screw and the rotor 113 of the electric motor 100M are integrally formed. Therefore, the number of components can be reduced, and the structure can be simplified. In the electric actuator 100, the rotation of the screw shaft 111 caused by the rotation of the nut of the ball screw, i.e., by the rotation of the rotor 113, is prevented by the involute spline that is formed integral with the drag bar 200 and the rotation preventing member 107, whereby the number of components can be reduced. In addition, the movement of the plural deflectors 112 mounted on the rotor 113 in the diameter direction is restricted by a single rotor lamination stack 114 supporting the magnets 115 on its outer periphery. Therefore, it is unnecessary to prepare a retaining member or a retaining mechanism for each of the deflectors 112, whereby the number of components can be reduced, and the structure can be simplified.

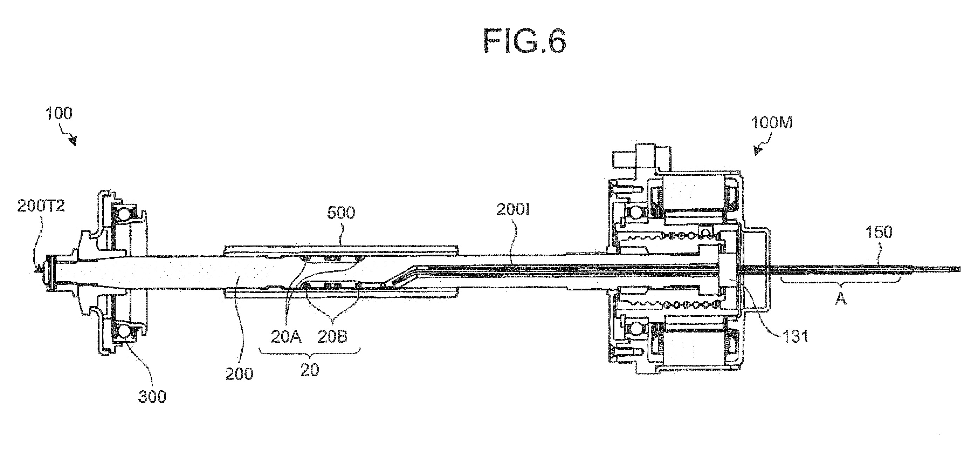

FIG. 6 is a sectional view illustrating the electric actuator according to the present embodiment in a state in which the clutch release bearing is mounted to the drag bar. The clutch release bearing 300 is mounted to the drag bar 200 of the electric actuator 100 at the side reverse to the conversion mechanism 125 (or the rotor 113 in FIG. 4), i.e., at the end (other end) 200T2. The clutch release bearing 300 applies an input from the drag bar 200 to the clutch 400. In the present embodiment, the drag bar 200 includes the torque sensor 20 for detecting torque transmitted by the power transmission shaft 500 of the automatic transmission 1 illustrated in FIG. 1. The torque sensor 20 includes a pair of first coils 20A and 20A, and a pair of second coils 20B and 20B arranged to be opposite to the first coils 20A and 20A.

When torque is applied to the power transmission shaft 500, distortion in the direction of tensile force (in the direction of +45 degrees) and in the compression direction (in the direction of -45 degrees) on the surface of the shaft. In this case, magnetic permeability increases in the direction of the tensile force, while the magnetic permeability decreases in the compression direction, due to a so-called magnetostriction effect. When the coil is arranged such that magnetic flux passes in the direction in which the magnetic permeability increases, an inductance L increases, while the inductance L decreases in the direction in which the magnetic permeability decreases. The first coil 20A whose inductance L increases (the coil detecting +45 degrees) and the second coil 20B whose inductance L decreases (the coil detecting -45 degrees) are coupled by a bridge connection, and a differential voltage is amplified by a lock-in amplifier (LIA), for example. With this, an output voltage in proportion to the torque of the power transmission shaft 50 can be detected. As described above, the torque sensor is a magnetostriction torque sensor. In the present embodiment, the pair of first coils 20A and 20A detects the distortion in the direction of the tensile force, and the pair of second coils 20B and 20B detects the distortion in the compression direction, as described above.

The torque sensor 20 is provided on the outer periphery of the drag bar 200 so as to detect the torque of the power transmission shaft 500 from the inside of the power transmission shaft 500. By virtue of this structure, it becomes unnecessary to arrange the torque sensor 20 in the automatic transmission 1 and at the outside of the power transmission shaft 500 for detecting the torque from the outside of the power transmission shaft 500. As a result, the torque sensor 20 is less affected by lubricant oil present in the automatic transmission 1, whereby durability and reliability are enhanced. It is preferable that the inner surface of the power transmission shaft 500 is covered with an Ni-based (e.g., an Ni-based metal) thin film for detecting the torque by the torque sensor 20 from the inside of the power transmission shaft 500. This structure increases the change in the magnetic permeability of the power transmission shaft 500, and enhances sensitivity of the torque sensor 20 to the torque transmitted by the power transmission shaft 500, thus preferable. The Ni-based thin film is Ni-Fe, for example. The Ni thin film can be formed by plating Ni-based metal or by a sputtering of Ni-based metal.

The signal line 150 of the torque sensor 20 moves forward and backward together with the forward and backward movements of the drag bar 200. If the signal line 150 moves in the passage 200I of the drag bar 200, friction of the signal line 150 might occur in the passage 200I or a load might be exerted on a bonding portion between the signal line 150 and the first and second coils 20A and 20B. In view of this, in the present embodiment, the signal line 150 is fixed by a clamp member 131 in the opening 200H (see FIG. 4) from which the signal line 150 is extracted from the drag bar 200 in order that the signal line 150 does not move in the passage 200I of the drag bar 200, as illustrated in FIG. 6. A play by which the signal line 150 extracted from the housing of the electric motor 100M moves is formed at the outside of the electric motor 100M (a portion indicated by A in FIG. 6). Thus, the deterioration in durability of the signal line 150 is effectively prevented.

As described above, the electric actuator 100 has a unit structure in which the clutch release bearing 300, the torque sensor 20, and the electric motor 100M are formed integral via the drag bar 200. Thus, the electric actuator 100 makes it possible to arrange the drag bar 200 and the torque sensor 20 on the same location, thereby being capable of reducing the number of components.

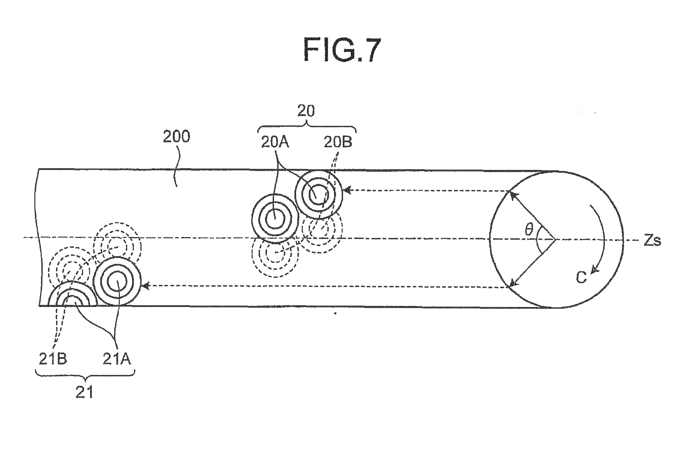

FIG. 7 is a perspective view illustrating one example of the arrangement of the torque sensor. The torque sensor 20 includes the pair of first coils 20A and 20A for measuring tensile force, and the pair of second coils 20B and 20B for measuring compression force. On the other hand, plural torque sensors are arranged on the different position in the axial direction and in the circumferential direction as illustrated in FIG. 7. In the present embodiment, the torque sensor (first torque sensor) 20 and a second torque sensor 21 are mounted on different positions in the direction of the Zs axis and in the circumferential direction.

The first torque sensor 20 includes the pair of first coils 20A and 20A, and the pair of second coils 20B and 20B. The first coils 20A and 20A and the second coils 20B and 20B are provided in a positional relation in which a center angle about the Zs axis in the circumferential direction (in the direction indicated by an arrow C in FIG. 7) of the drag bar 200 is 180 degrees. The second torque sensor 21 includes a pair of first coils 21A and 21A, and a pair of second coils 21B and 21B. The first coils 21A and 21A and the second coils 21B and 21B are provided in a positional relation in which a center angle about the Zs axis in the circumferential direction (in the direction indicated by an arrow C in FIG. 7) of the drag bar 200 is 180 degrees.

The first torque sensor 20 and the second torque sensor 21 are provided in a positional relation in which the center angle about the Zs axis in the circumferential direction of the drag bar 200 is θ degree. The first torque sensor 20 and the second torque sensor 21 are provided with a predetermined space in the direction of the Zs axis of the drag bar 200, i.e., in the longitudinal direction or in the extending direction. Since the first torque sensor 20 and the second torque sensor 21 are provided on different positions of the drag bar 200 in the direction of the Zs axis and in the circumferential direction, an error caused by a rotation fluctuation of the power transmission shaft 500 can be corrected.

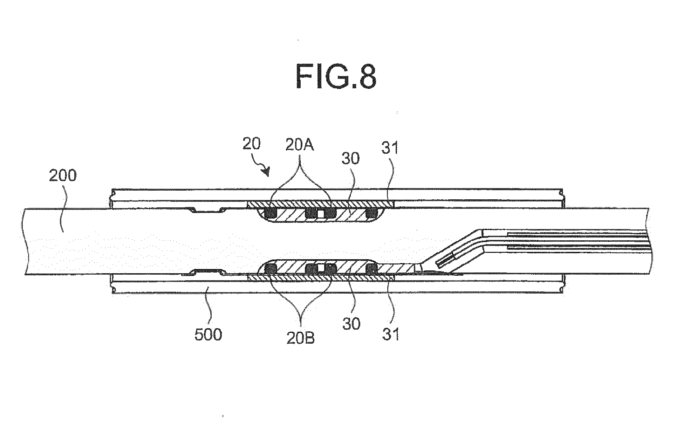

FIG. 8 is an enlarged sectional view illustrating the portion where the torque sensor is provided. In the present embodiment, a resin 30 is interposed between the torque sensor 20, more specifically, the first coil 20A and the second coil 20B, and the drag bar 200. For the resin 30, nylon 66 or PPS (Polyphenylene sulfide) can be used. In general, the resin described above has very small relative magnetic permeability generally equal to that of air, so that it is difficult to permit the passage of magnetic flux. Therefore, the resin 30 can prevent the magnetic flux, generated from the first coil 20A and the second coil 20B, from leaking to the drag bar 200 to reduce the magnetic flux flowing to the power transmission shaft 500. Consequently, the leakage of the magnetic flux to the drag bar 200 can be prevented, particularly when the drag bar 200 is made of metal. Accordingly, the deterioration in sensitivity of the torque sensor 20 can be prevented.

The drag bar 200 may be made of a non-magnetic material. Since the non-magnetic material has very small relative magnetic permeability, it is difficult to permit the passage of the magnetic flux. Therefore, the leakage of the magnetic flux to the drag bar 200 can further be reduced, whereby the deterioration in the sensitivity of the torque sensor 20 can further be prevented. A resin can be used as the non-magnetic material, for example. When the drag bar 200 is made of resin, the first coil 20A and the second coil 20B may be formed integral with the drag bar 200 in the drag bar 200. With this structure, the leakage of the magnetic flux to the drag bar 200 can further be reduced, whereby the deterioration in the sensitivity of the torque sensor 20 can further be prevented. Since the first coil 20A and the second coil 20B are formed integral with the drag bar 200, the assembly of the drag bar 200 and the torque sensor 20 is facilitated.

The torque sensor 20 detects the torque of the power transmission shaft 500 by utilizing the magnetostriction effect. In this case, a magnetic fluid 31 may be present between the torque sensor 20 and the power transmission shaft 500. With this structure, the air layer between the torque sensor 20 and the power transmission shaft 500 is replaced by the magnetic fluid 31, with the result that the magnetic resistance between them is reduced. Accordingly, the sensitivity of the torque sensor 20 is enhanced.

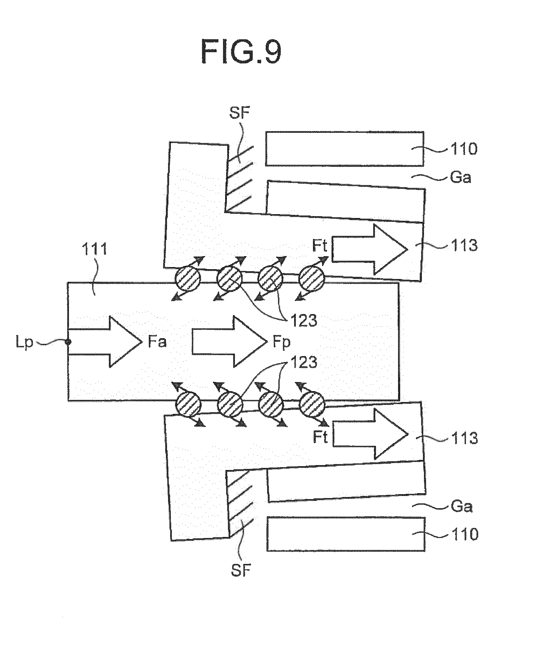

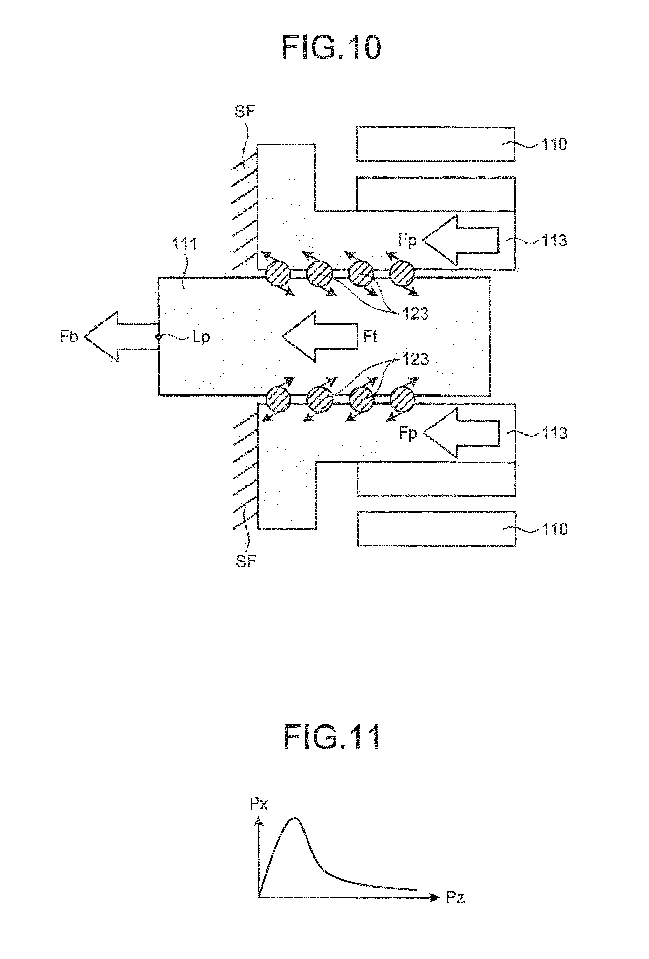

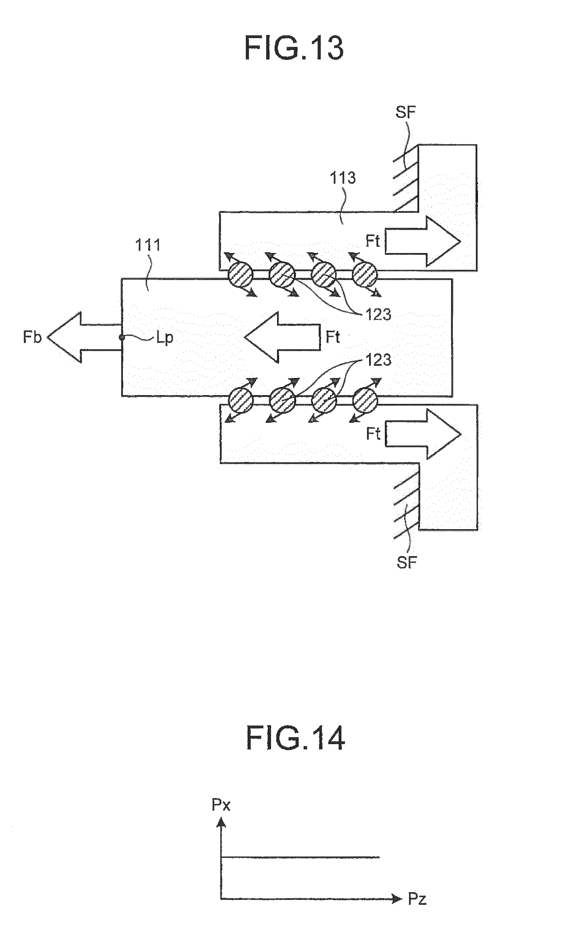

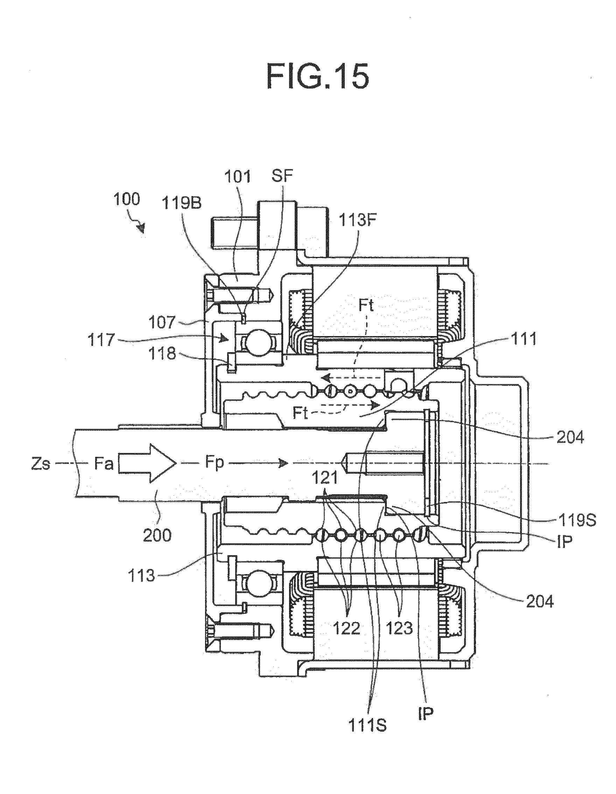

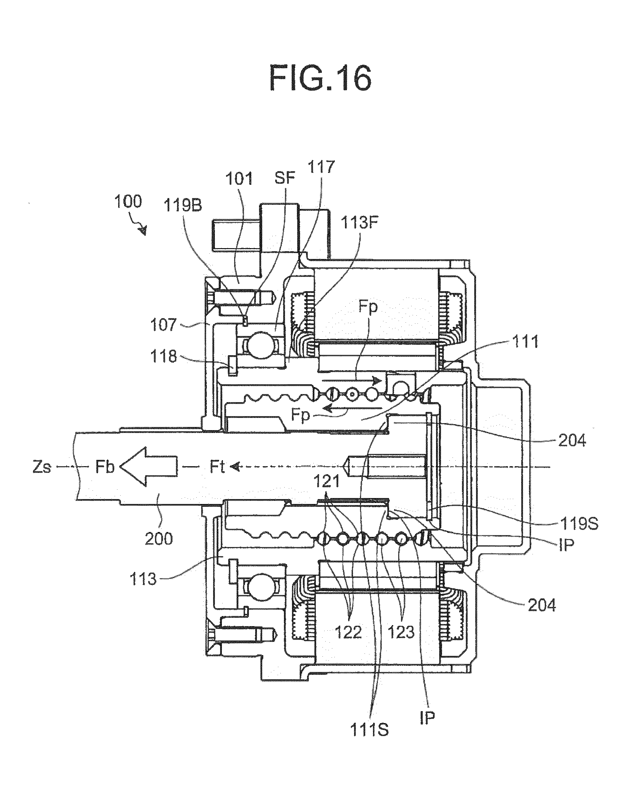

FIGS. 9, 10, 12, and 13 are schematic views illustrating the relationship of the force between the screw shaft and the rotor of the electric actuator. FIGS. 11 and 14 are views illustrating a distribution of a surface pressure exerted on the balls of the electric actuator according to the present embodiment. FIGS. 15 and 16 are schematic views illustrating the relationship of the force between the screw shaft and the rotor of the electric actuator. In the electric actuator 100 illustrated in FIG. 4, the rotation motion of the rotor 113 is converted into the linear motion of the screw shaft 111 and the drag bar 200 by using the conversion mechanism 125 utilizing the ball screw. In this case, it is necessary that either one of the rotor 113 serving as the nut and the screw shaft 111 is supported to be non-rotatable and to be capable of moving forward and backward. Therefore, either one of the rotor 113 and the screw shaft 111 is rotatable and cannot move forward and backward in the axial direction. When the rotor 113 is provided to be rotatable, and the screw shaft 111 and the drag bar 200 are provided not to be capable of moving forward and backward in the axial direction, the rotor 113 needs a bearing that transmits the load in the axial direction to the housing of the electric motor 100M. In the present embodiment, the rolling bearing 117, the shaft snap ring 118, and the hole snap ring 119B illustrated in FIG. 4 transmit the force from the rotor 113 in the axial direction (in the direction of the Zs axis that is the axis of rotation center of the rotor 113) to the first motor case 101 serving as the housing.

The conversion mechanism 125 utilizes the ball screw. If the load is not equally applied to the plural balls 123, some balls 123 might undergo excessive load. As a result, the balls 123 undergoing the excessive load might have a larger surface pressure on a contact point (referred to as a ball contact point, as needed) with a raceway. Therefore, it is desirable that the load is equally applied to the plural balls 123 in order to prevent the excessive increase in the surface pressure of the ball contact point.

The diameter of each ball 123 has to be increased in order to decrease the surface pressure on the ball contact point. On the other hand, when the load is equally applied to the balls 123, the surface pressure on the ball contact point is kept down, so that the diameter of each ball 123 is only small, resulting in that the size of the conversion mechanism 125 utilizing the ball screw can be decreased. FIGS. 9 and 10 illustrate the example in which the balls 123 do not equally have the load. FIG. 11 illustrates the relationship between a surface pressure Px on the ball contact point and a position Pz in the axial direction, when the balls 123 do not equally have the load (the same is applied to FIG. 14). A symbol SF in FIGS. 9 and 10 indicates a portion (hereinafter referred to as a load support portion SF) where the load is applied from the rotor 113 (the same shall apply below). The load support portion SF is the housing (in the present embodiment, the first motor case 101, or the like) of the electric motor 100M, for example.

FIG. 9 illustrates the case where the load (compression load) Fa is applied to the screw shaft 111 in the compression direction. Lp in the figure indicates a load operating point of the screw shaft 111 (the same shall apply below). The compression load Fa is transmitted to the rotor 113 serving as the nut via the balls 123, and transmitted to the load support portion SF via the rotor 113. In this case, a load (tensile load) Ft is applied to the rotor 113 in the direction of the tensile force. FIG. 10 illustrates the case where the load (tensile load) Fb in the direction of the tensile force is applied to the screw shaft 111. The tensile load Fb is transmitted to the rotor 113 via the balls 123, and transmitted to the load support portion SF via the rotor 113. In this case, the load (compression load) Fp is applied to the rotor 113 in the compression direction. In FIGS. 9 and 10, the input position of the load to the screw shaft 111 and the load support portion SF receiving the load from the rotor 113 are on the same side in the direction of the Zs axis with respect to the region where the plural balls 123 are arranged.

When the tensile load Ft different from the screw shaft 111 to which the compression load Fa is applied is exerted on the rotor 113, the load is not equally applied to the plural balls 123. When the compression load Fp different from the screw shaft 111 to which the tensile load Fb is applied is exerted on the rotor 113, the load is not equally applied to the plural balls 123. As a result, the surface pressure Px on the ball contact point is different depending upon the position Pz in the axial direction, i.e., in the direction of the Zs axis that is the axis of the rotation center of the rotor 113.

In the electric actuator 100, the nut of the ball screw is formed on the rotor 113. When the load is not equally applied to the plural balls 123, the stretch of the rotor 113 due to the elastic deformation is large on the position to which a large load is applied, and the stretch of the rotor 113 due to the elastic deformation is small on the position to which a small load is applied. As a result, the diameter of the rotor 113 might be changed depending upon the position in the axial direction, and hence, an air gap Ga between the rotor 113 and the stator 110 might be non-uniform, as illustrated in FIG. 9. It is desirable that the thickness of the rotor 113 is reduced in order to reduce the size and weight of the electric motor 100M provided to the electric actuator 100 as much as possible. When the thickness of the rotor 113 is reduced, the elastic deformation of the rotor 113 in the case where the load applied to the plural balls 123 becomes non-uniform increases more, so that the air gap Ga might increase more. As a result, the generation of the torque might be unstable in the electric motor 100M. In the conversion mechanism 125 in which the nut of the ball screw is provided on the rotor 113, applying the load equally to the plural balls 123 is important to stably generate the torque to the electric motor 100M.

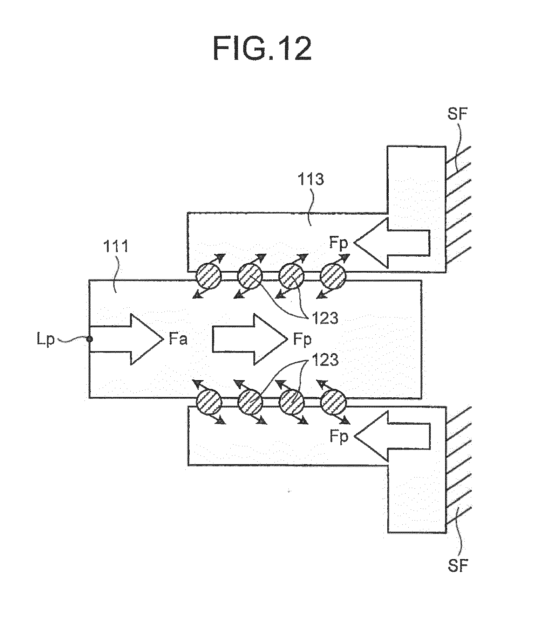

Different from the examples in FIGS. 9 and 10, the input position of the load to the screw shaft 111 and the load support portion SF to which the load is applied from the rotor 113 are on both sides of the region (ball arrangement region) where the plural balls 123 are arranged in the direction of the Zs axis in FIGS. 12 and 13. The ball arrangement region is an effective raceway portion of the ball screw. When the load (compression load) Fa is exerted on the screw shaft 111 in the compression direction in the arrangement of the input position of the load to the screw shaft 111 and the load support portion SF as described above, the load (compression load) Fp is applied to the rotor 113 in the compression direction as illustrated in FIG. 12. When the load (tensile load) Fb is applied to the screw shaft 111 in the tensile direction as illustrated in FIG. 13, the load (tensile load) Ft is applied to the rotor 113 in the tensile direction as illustrated in FIG. 13.

When the compression load Fa is applied to the screw shaft 111 and the rotor 113, the load is equally applied to the plural balls 123. Similarly, when the tensile load Fb is applied to the screw shaft 111 and the rotor 113, the load is equally applied on the plural balls 123. As a result, the surface pressure Px is generally fixed according to the position Pz in the axial direction as illustrated in FIG. 14.

As illustrated in FIG. 15, in the electric actuator 100, the compression load Fa from the drag bar 200 is inputted to the screw shaft 111 via the snap ring 119S of the drag bar 200. As illustrated in FIG. 16, in the electric actuator 100, the tensile load Fb from the drag bar 200 is inputted to the screw shaft 111 via the step portion 111S of the screw shaft 111 from the large-diameter portion 204 of the drag bar 200. Specifically, the input position of the load (load input position) IP to the screw shaft 111 is on the portion where the step portion 111S and the large-diameter portion 204 are in contact with each other and on the portion where the snap ring 119S is attached to the screw shaft 111.

As illustrated in FIGS. 15 and 16, the load from the rotor 113 is transmitted to the first motor case 101 from the large-diameter portion 113F of the rotor 113 or the shaft snap ring 118 mounted to the rotor 113 via the rolling bearing 117 and the hole snap ring 119B. Specifically, the load support portion SF that is the portion of receiving the load from the rotor 113 is the portion where the hole snap ring 119B of the first motor case 101 is mounted.

As illustrated in FIGS. 15 and 16, the load input position IP and the load support portion SF are arranged on both sides of the ball arrangement region in the direction of the Zs axis. Therefore, as illustrated in FIG. 15, when the compression force Fa is generated on the drag bar 200, and this force is inputted to the screw shaft 111, the tensile load Ft is generated on both the portion of the screw shaft 111 where the first groove 121 is formed and the portion of the rotor 113 where the second groove 122 is formed. As illustrated in FIG. 16, when the tensile force Fb is generated on the drag bar 200, and this force is inputted to the screw shaft 111, the compression load Fp is generated on both the portion of the screw shaft 111 where the first groove 121 is formed and the portion of the rotor 113 where the second groove 122 is formed.

As described above, in the present embodiment, the direction of the load in the direction of the Zs axis is the same on the portion of the screw shaft 111, which is a part of the drag bar 200, and on which the first groove 121 is formed, and on the portion of the rotor 113 where the second groove 122 is formed. As a result, the surface pressure Px is generally constant according to the position Pz in the axial direction. Accordingly, the electric motor 100M can suppress the fluctuation in the air gap Ga, thereby being capable of stably generating torque.

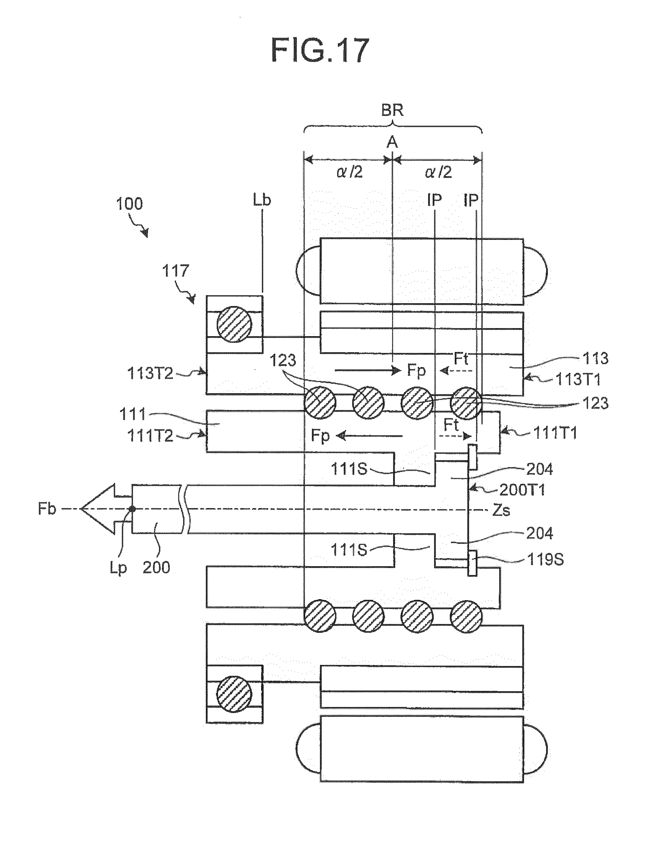

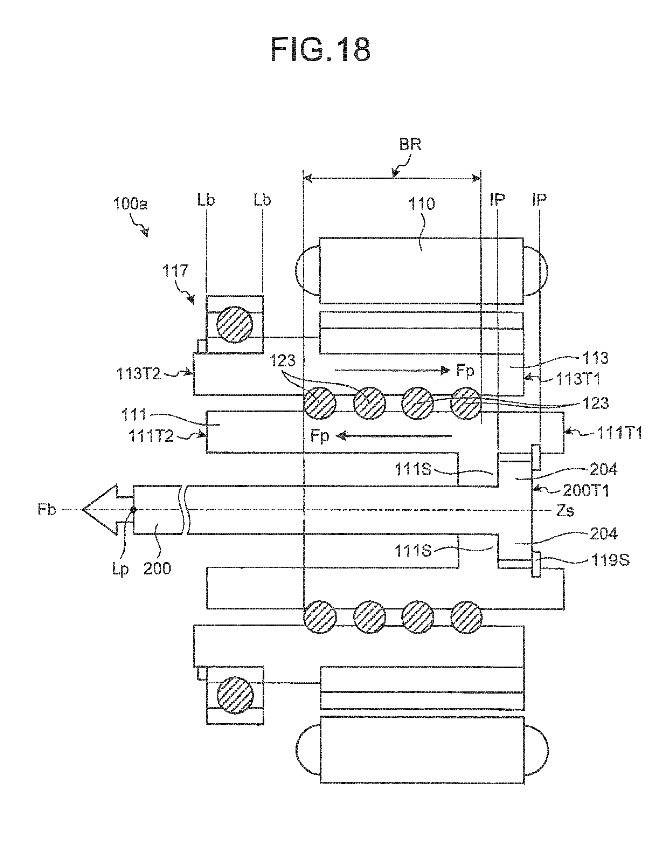

FIGS. 17 and 18 are views illustrating the relationship among the ball arrangement region, the load input position of the screw shaft, and the load operation position of the rolling bearing. In the electric motor 100M of the electric actuator 100 illustrated in FIG. 17, the load input position IP to the screw shaft 111 is present near one end 111T1 of the ball shaft 111. More specifically, the load input position IP to the screw shaft 111 is arranged in the ball arrangement region BR. The load operation position Lb to the rolling bearing 117 is present near the other end 111T2 of the ball shaft 111.

When the load input position IP of the portion on one end 111T1 of the screw shaft 111 where the step portion 111S and the large-diameter portion 204 are in contact with each other is present in the ball arrangement region BR, the compression load Fp and the tensile load Ft are mixedly applied to the screw shaft 111 and the rotor 113 across the load input position IP. The same is applied to the case where the load input position IP on the portion where the snap ring 119S is mounted to the screw shaft 111 is present in the ball arrangement region BR. FIG. 17 illustrates the case where the tensile load Fb is exerted on the load operation point Lp of the drag bar 200. The compression load Fp and the tensile load Ft are also mixedly present on the screw shaft 111 and the rotor 113 across the load input position IP, even when the compression load is exerted on the load operation point Lp of the drag bar 200.

In the present embodiment, it is preferable that both load input positions IP are located on the position apart from the rolling bearing 117 that is mounted near the other end 113T2 of the rotor 113 from α/2 position A in the axial direction (in the direction of the Zs axis), i.e., are located near one end 111T1 of the screw shaft 111. With this structure, the influence caused by the situation in which the compression load Fp and the tensile load Ft are both exerted on the screw shaft 111 and the rotor 113 can be reduced, whereby the surface pressure on the ball contact point is generally constant according to the position in the axial direction. Accordingly, the electric actuator 100 can suppress the fluctuation in the air gap, thereby being capable of stably generating torque.

One end 111T1 of the screw shaft 111 is on the side of other end 200T1 of the drag bar 200 and on one end 113T1 of the rotor 113. α is the size of the ball arrangement region in the axial direction (in the direction of the Zs axis) of the screw shaft 111. The α/2 position A is the center of the ball arrangement region BR in the axial direction (in the direction of the Zs axis).

As in the electric actuator 100a illustrated in FIG. 18, it is preferable that both load input positions IP are located on the position apart from the rolling bearing 117 that is mounted near the other end 113T2 of the rotor 113 from the ball arrangement region BR, i.e., are located near one end 111T1 of the screw shaft 111. In this case, the load input position IP of the screw shaft 111 and the load operation position Lb of the rolling bearing 117 are present on both sides of the ball arrangement region BR in the axial direction (in the direction of the Zs axis) of the screw shaft 111, and are arranged so as to sandwich the ball arrangement region BR. This structure can avoid the situation in which the compression load Fp and the tensile load Ft are both exerted on the screw shaft 111 and the rotor 113. As a result, the electric actuator 100a can avoid the influence caused by the situation in which the compression load Fp and the tensile load Ft are both exerted, whereby the surface pressure on the ball contact point is generally constant according to the position in the axial direction. Accordingly, the electric actuator 100 can suppress the fluctuation in the air gap, thereby being capable of stably generating torque.

In the present embodiment, the load operation position Lb of the rolling bearing 117 is present near the rolling bearing 117 from the ball arrangement region BR. This structure can make the electric actuator 100 compact.

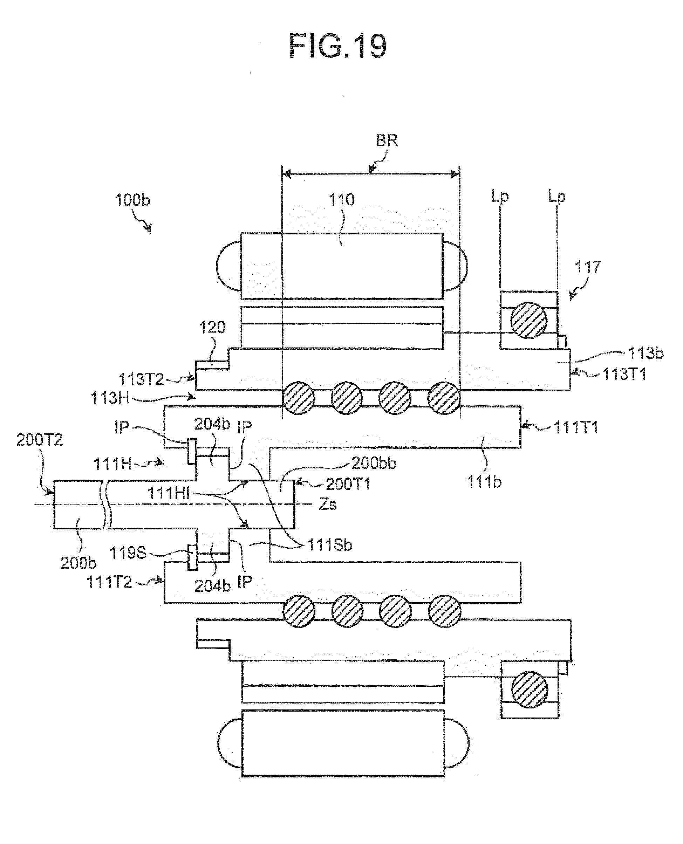

FIG. 19 is a view illustrating an electric actuator according to a modification of the present embodiment. A rotor 113b provided to an electric actuator 100b is supported such that a side reverse to an opening 113H is supported to be rotatable to a housing to which a stator 110 is mounted via a rolling bearing 117. Specifically, the rotor 113b has mounted thereto the rolling bearing 117 on one end 113T1, i.e., on the end reverse to the opening 113H, while has mounted thereto a slide bearing 120 on the other end 113T2. As viewed from the screw shaft 111b, the rolling bearing 117 is arranged on one end 111T1 of the screw shaft 111b.

The screw shaft 111 has an opening 111H into which the drag bar 200 is inserted on the other end 111T2, i.e., on the other end 113T2 (near the opening 113H) of the rotor 113b. The drag bar 200 has a large-diameter portion 204b projecting toward the outside in the diameter direction on one end 200T1. A bar-like portion 200bb extends from the large-diameter portion 204b toward one end 200T1. The bar-like portion 200bb is inserted into a step through-hole 111HI that is formed through a step portion 111Sb of the screw shaft 111. When the snap ring 119S is mounted to the other end 111T2 of the screw shaft 111 with this state, the large-diameter portion 204b of the drag bar 200 and the screw shaft 111 are fixed via the snap ring 119S on the other end 200T2 of the drag bar 200b.

The load input position IP of the screw shaft 111b is on the portion where the step portion 111S and the large-diameter portion 204 are in contact with each other on the other end 111T2 of the screw shaft 111 and on the portion where the snap ring 119S is attached to the screw shaft 111. The load input position IP of the screw shaft 111b and the load operation position Lb of the rolling bearing 117 are present on both sides of the ball arrangement region BR in the direction of the axes (in the direction of the Zs axis). Specifically, both load input positions IP are arranged on the position apart from the rolling bearing 117 from the ball arrangement region BR in the axial direction (in the direction of the Zs axis).

With this structure, the electric actuator 100b can avoid the influence caused by the situation in which the compression load and the tensile load are both exerted on the screw shaft 111b and the rotor 113b, whereby the surface pressure on the ball contact point is generally constant according to the position in the axial direction. Accordingly, the electric actuator 100b can suppress the fluctuation in the air gap, thereby being capable of stably generating torque. In the present embodiment, both load input positions IP may be located on the position apart from the rolling bearing 117 mounted on one end 113T1 of the rotor 113b from the center of the ball arrangement region BR in the axial direction (in the direction of the Zs axis), i.e., may be located on the other end 111T2 of the screw shaft 111b.

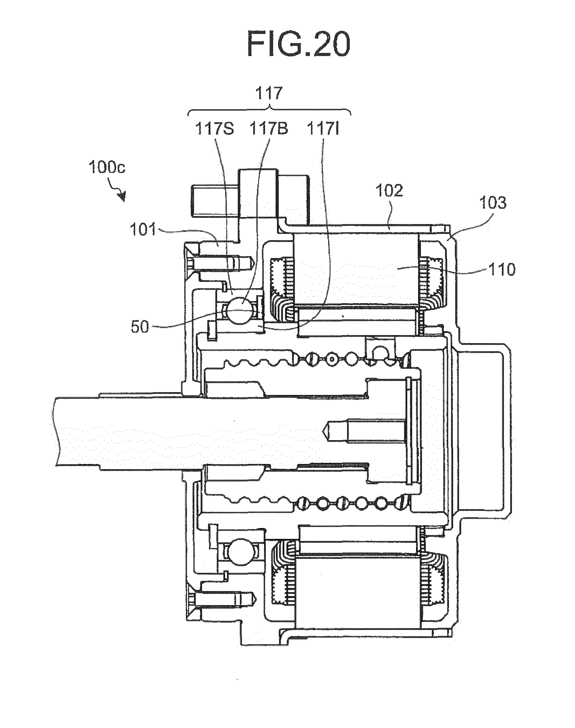

FIG. 20 is a sectional view illustrating an arrangement of a sealing member of the rolling bearing in the electric actuator according to the present embodiment. As described above, in the electric actuators 100, 110a, and 100b, the rotor 113 is integral with the nut of the ball screw. Therefore, the rolling bearing 117 is arranged to be adjacent to the rotor 113 in the first to third motor cases 101, 102, and 103 serving as the housing of the electric actuators 100, 110a, and 100b. In this arrangement, the lubricant oil or grease of the ball screw and the rolling bearing 117 might enter the housing, more specifically, might enter the space where the stator 110 is arranged. As a result, the electric actuators 100, 110a and 100b might not exhibit the ability to the fullest. In view of this, the electric actuators 100, 110a, and 100b need a structure for preventing the lubricant oil or grease from entering the space in the housing where the stator 110 is arranged. An electric actuator 100c illustrated in FIG. 20 has a sealing member 50, which seals the portion between the inner wheel 117I and the outer wheel 117S of the rolling bearing 117, in the housing and on the side where the rotor 113 and the stator 110 are arranged. This structure can reduce the possibility of the lubricant oil or grease entering the space in the housing where the stator 110 is arranged, resulting in that the electric actuator 100 can exhibit its ability to the fullest. The sealing member 50 may be provided to the rolling bearing 117 of the electric actuators 100, 110a, and 100b.

When the electric actuator 100 according to the present embodiments is used for a vehicle such as an automobile, it is desirable that the number of components is reduced as much as possible from the demand of reducing the mass of the electric actuator as much as possible and the demand of reducing cost as much as possible. Therefore, a part of the rotor 113 serving as the nut of the ball screw may also be used as the inner wheel 117I of the rolling bearing 117 supporting the rotor 113.

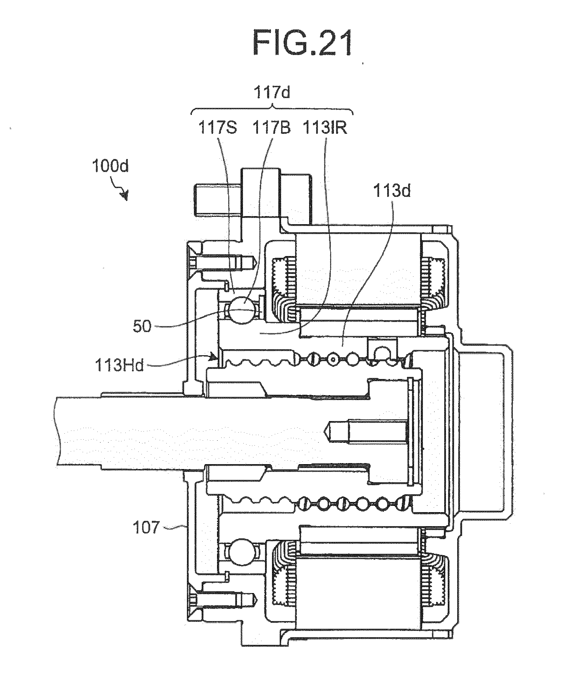

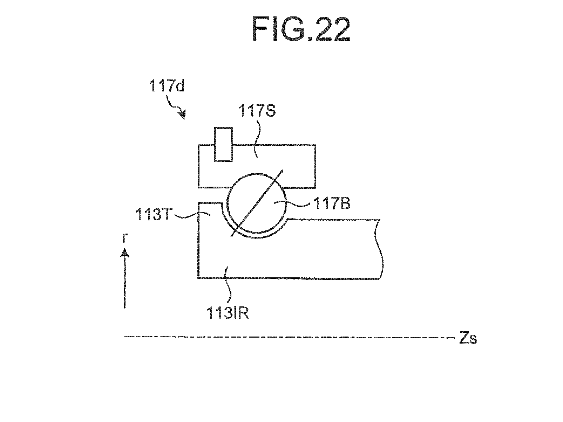

FIG. 21 is a sectional view illustrating an electric actuator provided with a rotor that is also used as the inner wheel of the rolling bearing. FIG. 22 is an enlarged view illustrating the rolling bearing of the electric actuator illustrated in FIG. 21. An opening portion 113Hd, opposite to the rotation preventing member 107, of the rotor 113d of the electric actuator 100c serves as an inner wheel 113IR of a rolling bearing 117d. The rolling bearing 117d includes the inner wheel 113IR, a rolling member 117B, and an outer wheel 117S. Thus, the number of components of the electric actuator 100d can be reduced.

Since the function required to the material for the inner wheel of the rolling bearing and the material for the nut of the ball screw are common, the same material can be used. An SCM420H carburized material can be used as the material, for example. As illustrated in FIG. 19, the height of the shoulder of the inner wheel 113IR is increased, considering the direction in which the force is exerted. Specifically, a shoulder 113T (the opening 113Hd illustrated in FIG. 18) of the inner wheel 113IR extends toward the diameter direction (direction indicated by an arrow r in FIG. 19), in order to increase the diameter of the shoulder 113T more than the reverse side across the rolling member 117B. This structure can provide advantages of retaining the rotor 113d and of applying a large axial load on the rolling bearing 117d. There is also an advantage that the size of the electric actuator 100d in the axial direction can be reduced by the integral structure of the rotor 113d and the inner wheel 113IR of the rolling bearing 117d. The reason is as described below. Specifically, since a snap ring for retaining the rolling bearing 117 is unnecessary, the size of the electric actuator 100d in the axial direction can be reduced by the size of the snap ring.

Although the embodiment of the present invention has been described above, the present invention is by no means limited to the above-mentioned embodiment. It should be noted that components described herein may be replaced with other components that are obvious to those skilled in the art, are substantially equal, and are equivalents. The components described herein may be combined as may be necessary. Furthermore, various omissions, substitutions and changes in the components may be made without departing from the spirit of the embodiments.

### Reference Signs List

- 1: AUTOMATIC TRANSMISSION
- 1C: HOUSING
- 20A, 21A: FIRST COIL
- 20B, 21B: SECOND COIL
- 20: TORQUE SENSOR (FIRST TORQUE SENSOR)
- 21: SECOND TORQUE SENSOR
- 30: RESIN
- 31: MAGNETIC FLUID
- 50: SEALING MEMBER
- 100, 100a, 100b, 100c, 100d: ELECTRIC ACTUATOR
- 100M: ELECTRIC MOTOR
- 101: FIRST MOTOR CASE
- 102: SECOND MOTOR CASE
- 103: THIRD MOTOR CASE
- 104: CAULKING PORTION
- 107: ROTATION PREVENTING MEMBER
- 109: THROUGH-HOLE
- 110: STATOR
- 111: SCREW SHAFT
- 111I: HOLLOW PORTION
- 111S: STEP PORTION
- 113, 113b, 113d: ROTOR
- 113H, 113Hd: OPENING
- 113F: LARGE-DIAMETER PORTION
- 113I: HOLLOW PORTION
- 113IR: INNER WHEEL
- 113T: SHOULDER
- 114: ROTOR LAMINATION STACK
- 115: MAGNET
- 116: INVOLUTE SPLINE HOLE
- 117, 117d, 600a, 600b, 600c: ROLLING BEARING
- 117B: ROLLING MEMBER
- 117I: INNER WHEEL
- 117S: OUTER WHEEL
- 118: SHAFT SNAP RING
- 119B: HOLE SNAP RING
- 119S: SNAP RING
- 120: SLIDE BEARING
- 121: FIRST GROOVE
- 122: SECOND GROOVE
- 123: BALL
- 125: CONVERSION MECHANISM
- 131: CLAMP MEMBER
- 150: SIGNAL LINE
- 200: DRAG BAR
- 200H: OPENING
- 200T1: ONE END
- 200T2: OTHER END
- 200I: PASSAGE
- 201: FIRST INVOLUTE SPLINE SHAFT
- 202: SECOND INVOLUTE SPLINE SHAFT
- 204: LARGE-DIAMETER PORTION
- 300: CLUTCH RELEASE BEARING
- 400: CLUTCH
- 500: POWER TRANSMISSION SHAFT
- Fa, Fp: COMPRESSION LOAD
- Fb, Ft: TENSILE LOAD
- Ga: AIR GAP
- IP: LOAD INPUT POSITION
- Lb: LOAD OPERATION POSITION
- SF: LOAD SUPPORT PORTION

## Claims

1. An electric actuator comprising:
an operation member that is a bar-like member, and that has a first helical groove on its outer peripheral surface on one end;
a rotor that is a cylindrical member having a hollow portion into which the operation member is arranged, the hollow portion having a second helical groove, corresponding to the first groove, on a part of its inner peripheral surface, and an opening from which the other end of the operation member projects from the hollow portion;
plural balls arranged between the first groove and the second groove;
a circulating member mounted to the rotor for circulating the balls;
a stator that is arranged at the outside of the rotor in the diameter direction that rotates the rotor about an axis of the rotor in order to move the operation member in the direction of the axis; and
a rotation preventing member that is engaged with a part of the operation member for preventing the rotation of the operation member about the axis.

2. The electric actuator according to claim 1, wherein
the circulating member is buried in the rotor from the outer peripheral surface of the rotor, and
the rotor has a cylindrical member mounted on its outer peripheral surface and at the outside of the circulating member.

3. The electric actuator according to claim 1 or claim 2, wherein
a direction of a load in the direction of the axis is the same on the portion of the operation member where the first groove is formed and on the portion of the rotor where the second groove is formed.

4. The electric actuator according to claim 3, wherein
the operation member has a cylindrical screw shaft, having the first groove on its outer peripheral surface, on the outer periphery on one end,
the screw shaft is mounted on one end of the operation member,
the rotor is mounted such that the portion where the opening is formed is supported to be rotatable to a housing, to which the stator is mounted, via a rolling bearing, and
an input position of a load to the screw shaft is arranged on a position apart from the rolling bearing from a center of a region where the plural balls are arranged in the direction of the axis.

5. The electric actuator according to claim 4, wherein
the input position of the load to the screw shaft is arranged on a position apart from the rolling bearing from the region where the plural balls are arranged in the direction of the axis.

6. The electric actuator according to claim 3, wherein
the operation member has a cylindrical screw shaft, having the first groove on its outer peripheral surface, on the outer periphery on one end,
the screw shaft is mounted on one end of the operation member,
the rotor is mounted such that the portion reverse to the portion where the opening is formed is supported to be rotatable to a housing, to which the stator is mounted, via a rolling bearing, and
an input position of a load to the screw shaft is arranged on a position apart from the rolling bearing from a center of a region where the plural balls are arranged in the direction of the axis.

7. The electric actuator according to claim 6, wherein
the input position of the load to the screw shaft is arranged on a position apart from the rolling bearing from the region where the plural balls are arranged in the direction of the axis.

8. The electric actuator according to any one of claims 4 to 7, wherein
the rolling bearing has a sealing member, which seals between an inner wheel and an outer wheel, on the side where the rotor and the stator are arranged.

9. The electric actuator according to any one of claims 4 to 8, wherein
the portion of the rotor where the opening is formed serves as the inner wheel of the rolling bearing.

10. The electric actuator according to any one of claims 1 to 9, further comprising:
when a clutch, provided in a power transmission device that includes a hollow power transmission shaft for transmitting power from a power source and the clutch arranged between the power source and the power transmission shaft, is operated,
a clutch release bearing that is mounted to the end of the operation member reverse to the rotor, and that applies an input to the clutch from the operation member; and
a torque sensor that is mounted to the operation member for detecting torque transmitted by the power transmission shaft.

11. The electric actuator according to claim 10, wherein
the operation member has a passage extending in its longitudinal direction and open to the end near the rotor, and
a signal line of the torque sensor is extracted from the passage of the operation member through the opening, and fixed to the operation member on the portion of the opening.

12. The electric actuator according to claim 10 or 11, wherein
the inner surface of the power transmission shaft is covered by a Ni-based thin film.

13. An electric actuator that operates a clutch, provided in a power transmission device that includes a hollow power transmission shaft for transmitting power from a power source and the clutch arranged between the power source and the power transmission shaft, comprising:
a stator;
a rotor arranged at the inside of the stator in the diameter direction;
a bar-like operation member arranged at the inside of the power transmission shaft;
a conversion mechanism configured to convert a rotation motion of the rotor into a linear motion in the extending direction of the operation member;
a clutch release bearing that is mounted to the end of the operation member reverse to the rotor, and that applies an input to the clutch from the operation member; and
a torque sensor that is mounted to the operation member for detecting torque transmitted by the power transmission shaft.

14. The electric actuator according to claim 13, wherein
the operation member has a passage extending in its longitudinal direction and open to the end near the conversion mechanism, and
a signal line of the torque sensor is extracted from the passage of the operation member through the opening, and fixed to the operation member on the portion of the opening.

15. The electric actuator according to claim 13 or claim 14, wherein
the torque sensor includes a first torque sensor and a second torque sensor that is mounted on a different position from the first torque sensor in the longitudinal direction and in the circumferential direction of the operation member.

16. The electric actuator according to any one of claims 13 to 15, wherein
the inner surface of the power transmission shaft is covered by a Ni-based thin film.

17. The electric actuator according to any one of claims 13 to 16, wherein
the torque sensor is mounted to the outer periphery of the operation member for detecting the torque from the inside of the power transmission shaft.

18. The electric actuator according to claim 17, wherein
a resin is interposed between the torque sensor and the operation member.

19. The electric actuator according to any one of claims 13 to 18, wherein
the operation member is non-magnetic.

20. The electric actuator according to any one of claims 13 to 19, wherein
magnetic fluid is present between the operation member and the power transmission shaft.
